# EUROPEAN PATENT APPLICATION

(11) **EP 2 175 182 A1**
(43) Date of publication of application: **14.04.2010**
(21) Application number: 08425655.1
(22) Date of filing: 09.10.2008
(51) Int. Cl.: F16K 3/02, F16K 27/04

(54) **Sluice-gate fitting device for assembling of necessary equipment for pressure fluids supply piping plugging interventions**

(71) Applicant: I.S.I.F. S.R.L., 52027 San Giovanni Valdarno (IT)
(72) Inventor: Odori, Mauro, 52020 Castelfranco di Sopra (AR) (IT)

(57) **Abstract**

Sluice-Gate Fitting Device (DWG 1) is an innovating conception device that allows to make easier and to lower time and resources necessary for plugging intervention on pressure fluids supply pipes. The Sluice-Gate Fitting Device meets the double function of fitting for equipment assembly and anti-leakage valve of the pressure fluid during the operation of plugging interventions.
The Sluice-Gate Fitting Device allows the operation of plugging intervention on pressure pipes without using a valve for equipment assembly (as they are assembled directly on the fitting with a proper fixing flange) and with an internal locking system safer an more efficient of traditional ones.

## Description

Any intervention on pressure fluids supply piping in service that needs steel piping to be cut and then jointed by welding makes the operators stop the flow by means of proper plugging machines available on the market. Plugging machines are assembled on the pipe object of the intervention by means of properly shaped steel fittings (available in several dimensions) which are to be welded on the pipe. Between the fitting and the plugging machine a valve is assembled which allows the assembly of the pipe-drilling machine, by means of which the pipe is drilled below the fitting; afterwards, the drilling machine is disassembled from the valve and, in its place, plugging machine is assembled without flow leakages in the air. When the intervention is over and the plugging machine has been dissembled, by means of the pipe-drilling machine the internal plug of the fitting (which can be a threaded or a mechanical expansion plug) is assembled; then, the valve is disassembled and the external cap of the fitting is assembled (which can be a threaded cap or a flange). The intervention is now over, and the regular service of the pressure fluids supply piping is restored.

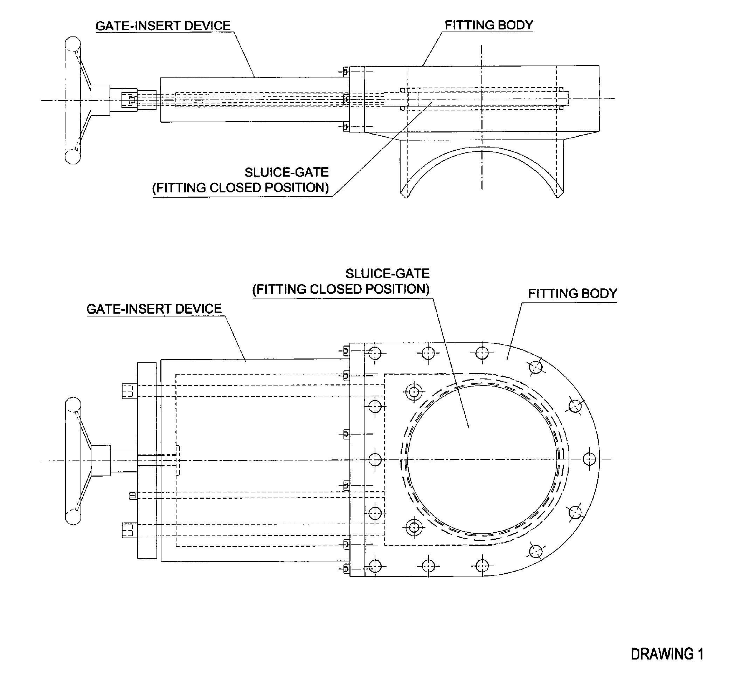

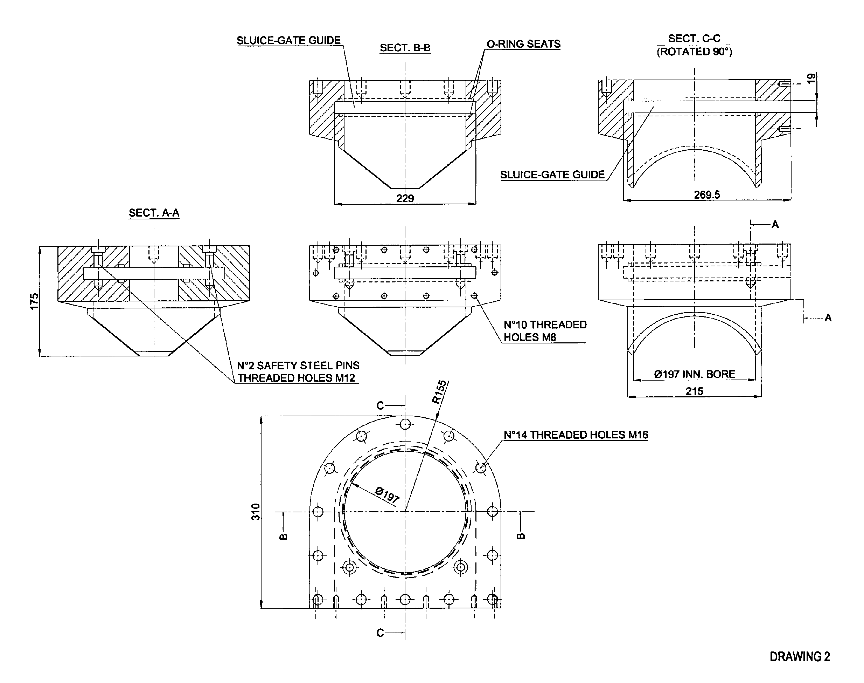

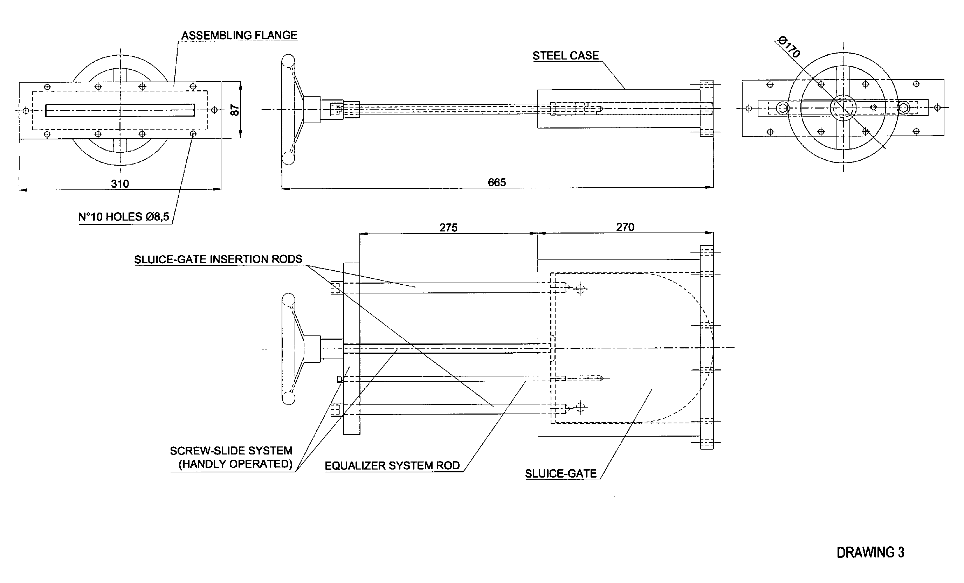

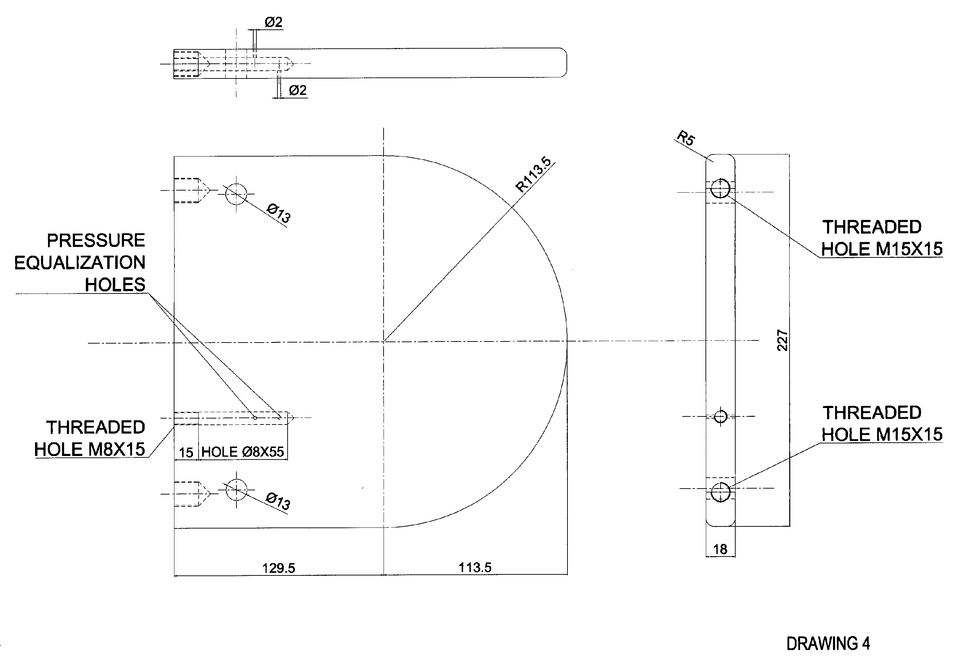

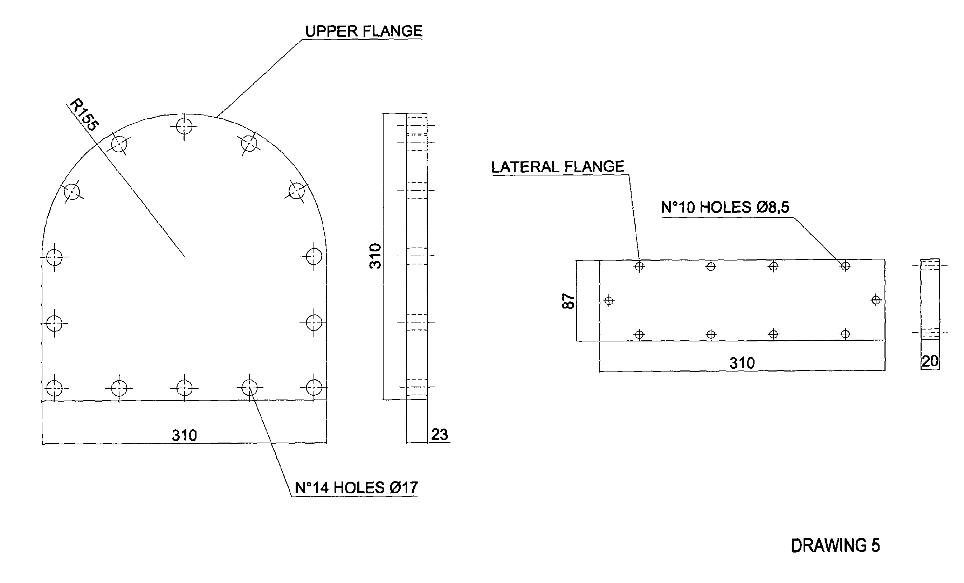

### SLUICE-GATE FITTING DEVICE (Drawing 1- the dimensions refer to a 8" fitting)

SLUICE-GATE FITTING DEVICE is composed by the following elements:
1. Fitting-Body (DWG. 2 - the dimensions refer to a 8" fitting): the lower part of the steel fitting-body is properly shaped to fit the external surface of the pipe on which it is to be welded (several realises will be implemented to fit pipe diameters ranging 2" - 20"). The upper surface of the fitting-body presents threaded holes for direct assembling of pipe-drilling machine (available on the market), by means of a proper fitting flange, and of the upper external flange (equipped of gasket). Starting from the flat lateral surface of the fitting, an internal guide allows the insertion of the sluice-gate that will completely close the internal lengthwise duct of the fitting; on the upper and lower surfaces of the guide there are the seats for o-ring gaskets that will seal the sluice-gate. On the lateral flat surface of the fitting there are the threaded holes for assembling (equipped of gasket) the Gate-Insert Device (integral part of the Sluice-Gate Fitting device) and the lateral external flange (equipped of gasket).
2. Gate-Insert Device (DWG. 3 - the dimensions refer to a 8" fitting): it's composed of a steel shell equipped, on the front side, of a flange for assembling on the flat lateral surface of the fitting-body. Inside the shell can slide, properly guided, the sluice-gate, that will be inserted in the internal guide of the fitting by means of the system of rods present in the rear side of the gate-insert device. Rods are actuated by means of a screw-slide system (manually or fluid-dynamically operated) and push the sluice-gate from the inside of the gate-insert device to the inside of the fitting. A third rod operates the pressure equalizer system between the upper and lower surfaces of the gate.
3. Sluice-Gate (DWG. 4 - the dimensions refer to a 8" fitting): is a steel plate of proper thickness (variable according to the pipe diameter and the pressure of the fluid carried) which has the function to close the internal duct of the fitting. The sluice-gate has, on its rear side, two threaded holes for fixing the pushing rods of the gate-insert device, and a third threaded hole (linked to two small holes on the upper and lower surfaces of the sluice-gate) which allows, by means of a proper sealed pin, to get the equalization of the pressure on the upper and lower surfaces of the sluice-gate in order to make easier its opening against the fluid pressure. The sluice-gate is also provided of two holes for the steel pin that assure a safe and steady locking of the gate at the end of the intervention.
4. Upper flange and lateral flange (DWG. 5 - the dimensions refer to a 8" fitting):
   these flanges allow the external locking of the upper and lateral surfaces of the fitting by means of the threaded holes respectively present. Between the flanges and the fitting are positioned proper gaskets the assure the sealing of the locking at the end of the intervention.

### OPERATION

The fitting is welded on the pressure pipe object to be plugged. On the lateral flat surface the Gate-Insert device is assembled. On the upper surface of the fitting is assembled the drilling-machine, the pipe is drilled, the sluice-gate is inserted by means of the Gate-Insert device, the drilling-machine is disassembled and the plugging machine is assembled. The sluice-gate, by means of the gate-insert device, is opened again, the plug is inserted inside the pipe through the fitting; the intervention on the pressure pipe can now be performed. At the end of the intervention, the plug is removed, the sluice-gate is closed (by means of the gate-insert device), the plugging machine is disassembled from the fitting. The locking pins of the sluice-gate are now inserted, the upper flange is assembled, the gate-insert device is disassembled, the lateral flange is assembled.

## Claims

1. The Sluice Gate Fitting Device meets in a single device the double function of fitting for equipment assembly and anti-leakage valve of the pressure fluid during the operation of plugging interventions.

2. The internal locking by means of the sluice-gate is a safer, more efficient, simpler locking system than the ones usually employed (threaded plug of mechanical-expansion plug, both inserted by means of the drilling machines); furthermore, the sluice-gate locking allows to immediately check the correct execution of the locking.

3. The Sluice Gate Fitting Device allows an overall simplification of the operations linked to pressure pipe plugging interventions as it permits to eliminate the valve (often big, heavy and hard to handle) and the drilling machine for the assembly of internal plugs.
